# EUROPEAN PATENT SPECIFICATION

(11) **EP 4 517 904 B1**
(45) Date of publication and mention of the grant of the patent: **09.09.2026**
(21) Application number: 23901155.4
(22) Date of filing: 08.12.2023
(51) Int. Cl.: H01M 10/0567, H01M 4/505, H01M 4/525, H01M 10/052, H01M 4/48, H01M 10/0525

(54) **NON-AQUEOUS ELECTROLYTE AND LITHIUM SECONDARY BATTERY INCLUDING THE SAME**
WASSERFREIE ELEKTROLYT- UND LITHIUM-SEKUNDÄRBATTERIE EINSCHLIESSLICH DER GLEICHEN
ÉLECTROLYTE NON AQUEUX ET BATTERIE SECONDAIRE AU LITHIUM LES COMPRENANT

(30) Priority: 08.12.2022 KR 20220171006
(43) Date of publication of application: 05.03.2025
(73) Proprietor: LG Energy Solution, Ltd., Seoul 07335 (KR)
(72) Inventor: JI, Su Hyeon, Daejeon 34122 (KR); LEE, Jung Min, Daejeon 34122 (KR); LEE, Chul Haeng, Daejeon 34122 (KR)
(74) Representative: Hoffmann Eitle
(86) International application number: PCT/KR2023/020216
(87) International publication number: WO 2024/123138

(56) References cited:
- CN-A- 112 778 205
- JP-B2- 6 380 409
- KR-A- 20190 059 256
- KR-A- 20200 030 579
- US-A1- 2014 004 413

## Description

### Technical Field

### Cross-reference to Related Applications

This application claims the benefit of Korean Patent Application No.10-2022-0171006, filed on December 8, 2022, in the Korean Intellectual Property Office.

### Technical Field

The present invention relates to a non-aqueous electrolyte and a lithium secondary battery including the same.

### BACKGROUND ART

Recently, as application fields of a lithium secondary battery have rapidly expanded to not only the power supply of electronic devices such as electricity, electronics, communications, and computers but also the power storage supply of large-area devices such as automobiles and power storage devices, a demand for a secondary battery having high capacity, high output, and high stability has been increasing.

In particular, in a lithium secondary battery for automobiles, high capacity, high output, and long-term service life characteristics have been becoming important. In order to increase the capacity of the secondary battery, a high-nickel positive electrode active material having high energy density but low stability may be used, or the secondary battery may be driven with a high voltage.

However, when the secondary battery is driven under the above conditions, as charging and discharging proceeds, the surface structure of an electrode or a film formed on the surface of positive/negative electrode deteriorates due to a side reaction caused by the deterioration of an electrolyte, and thus transition metal ions may be eluted from the surface of the positive electrode. As described above, since the eluted transition metal ions are electro-deposited on the negative electrode, and reduce passivation ability of a solid electrolyte interphase (SEI), there occurs a problem in that the negative electrode is deteriorated.

This deterioration phenomenon of the secondary battery tends to be further accelerated when the potential of the positive electrode is increased or when the battery is exposed to high temperatures, and there occurs a problem of worsening cycle characteristics of the secondary battery due to the deterioration phenomenon.

In addition, when the lithium ion battery is continuously used for a long period of time or left to stand at high temperatures, gas is generated, thereby causing a so-called swelling phenomenon in which the thickness of the battery increases, and it is known that the amount of gas generated in this case depends on the state of the SEI.

Therefore, in order to solve such problems, research and development on methods capable of suppressing the elution of metal ions from the positive electrode and forming a stable SEI film on the negative electrode, thereby reducing the swelling phenomenon of the secondary battery and increasing the stability at high temperatures have been attempted.

KR 2019 0059256 relates to a non-aqueous electrolyte for a lithium secondary battery capable of suppressing gas generation and a lithium secondary battery comprising the same.

### DISCLOSURE OF THE INVENTION

### TECHNICAL PROBLEM

As a result of conducting multifaceted research to solve the limitation, an aspect of the present invention provides a non-aqueous electrolyte, with improved high temperature stability, by suppressing deterioration of a positive electrode, reducing side reactions on the positive electrode and in the electrolyte, and forming an SEI film stable on a negative electrode.

That is, an aspect of the present invention also provides a lithium secondary battery with improved overall performances such as high-temperature cyclic characteristics, high-temperature storage characteristics, and thermal stability by including the non-aqueous electrolyte.

### TECHNICAL SOLUTION

According to an aspect of the present invention, there is provided a non-aqueous electrolyte including a lithium salt, an organic solvent, a compound represented by Formula 1 below as a first additive, and a compound represented by Formula 2 or Formula 3 below as a second additive.

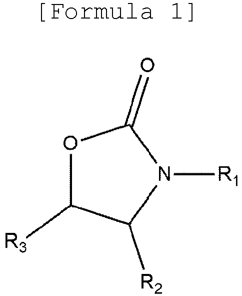

In Formula 1 above, R₁ is any one selected from the group consisting of an alkyl group having 1 to 5 carbon atoms capable of being substituted with fluorine, an alkenyl group having 2 to 5 carbon atoms capable of being substituted with fluorine, an alkynyl group having 2 to 5 carbon atoms capable of being substituted with fluorine, SO₂R', and COR', R' is any one selected from the group consisting of an alkyl group having 1 to 5 carbon atoms capable of being substituted with fluorine, an alkenyl group having 2 to 5 carbon atoms capable of being substituted with fluorine, and an alkynyl group having 2 to 5 carbon atoms capable of being substituted with fluorine, and R₂ and R₃ are each independently any one selected from the group consisting of H, an alkyl group having 1 to 5 carbon atoms, and an alkoxy group having 1 to 5 carbon atoms.

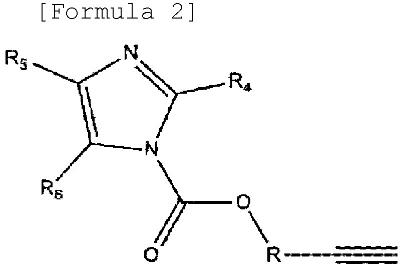

In Formula 2 above, R is an alkylene group having 1 to 3 carbon atoms capable of being substituted with fluorine, and R₄ to R₆ are each independently any one selected from the group consisting of H, an alkyl group having 1 to 3 carbon atoms, and a nitrile group.

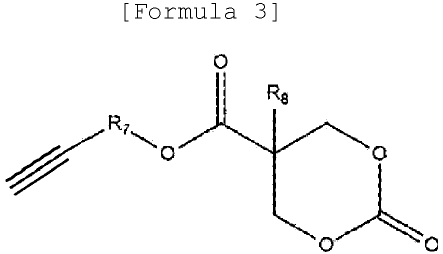

In Formula 3 above, R₇ is an alkylene group having 1 to 8 carbon atoms capable of being substituted with fluorine, and R₈ is any one selected from the group consisting of H, an alkyl group having 1 to 10 carbon atoms, and a cycloalkyl group having 3 to 8 carbon atoms.

In addition, according to another aspect of the present invention, there is provided a lithium secondary battery including the non-aqueous electrolyte.

### ADVANTAGEOUS EFFECTS

A compound of Formula 1 above provided as a first additive according to the present invention is an oxazolidinone-based compound, and a cyclic structure thereof is broken on positive electrode and negative electrode surfaces to easily form a film. Specifically, since carbon having a lower electronegativity than nitrogen and oxygen in an oxazolidinone ring also has a lower electron density than the nitrogen and oxygen in the oxazolidinone ring, the carbon is easily reduced on the negative electrode to be capable of forming the film. On the contrary, since oxygen of C=O in the oxazolidinone ring strongly interacts with the positive electrode due to increase of an oxidation number of transition metal of a positive electrode active material on the positive electrode during charging, a ring structure may be broken, and the film may be easily formed. Since the oxazolidinone ring structure is broken into a radical form to cause an additional cross-link reaction, a robust and stable film may be formed. In addition, since the nitrogen and oxygen in the oxazolidinone ring structure have a pair of unshared electrons, when lithium ions are lithiated-delithiated to the positive electrode/negative electrode, a film having a high lithium mobility is formed. Accordingly, the first additive according to the present invention may suppress deterioration of passivation ability of SEI at a high temperature to prevent degradation of the negative electrode and improve performance of a lithium secondary battery.

A compound of Formula 2 or 3 above, provided as a second additive according to the present invention includes a propargyl group in a molecule to help improve high-temperature durability. An SEI film made through a reduction reaction of the compound of Formula 2 or 3 above on the negative electrode includes the propargyl group, and the propargyl group becomes a cross-link site in SEI to be capable of an additional reaction. Since a robust SEI film is formed by the additional cross-link reaction, deterioration of performance due to electro-deposition on the negative electrode of transition metal eluted from a positive electrode may be effectively suppressed. In addition, a cyclic carbonate functional group and an imidazole functional group included in the additive of Formula 2 or 3 above may effectively suppress deterioration of the positive electrode and a side-reaction on a positive electrode surface to improve performance and to reduce elution of transition metal occurring during charging. That is, the compound of Formula 2 or 3 above provided as the second additive for the non-aqueous electrolyte according to the present invention may form an ion-conductive film stable on the positive electrode and negative electrode surfaces.

Accordingly, when the non-aqueous electrolyte according to the present invention including the first additive and the second additive is used, a film formation reaction of the second additive is accelerated by a radical generated while a ring structure of the first additive is broken. The film formed by interaction of the first additive and the second additive may have excellent lithium ionic transfer characteristics due to oxazolidinone, imidazole, an annular carbonate structure, or a structure caused thereby between aliphatic alkyl group-based films to improve charging-discharging characteristics and output characteristics of the lithium secondary battery. The film formed by the interaction of the first additive and the second additive may have excellent oxidation resistance to suppress a side reaction occurring on the film of the positive electrode and negative electrode even in the acidic atmosphere of the electrolyte. In addition, the film formed by the interaction of the first additive and the second additive has excellent durability even against volume expansion of the negative electrode occurring during charging and discharging. Therefore, the non-aqueous electrolyte according to the present invention may form an electrode-electrolyte interface stable and durable at a high temperature, and may suppress an unnecessary electrolyte decomposition side-reaction, thereby achieving the lithium secondary battery with improved overall performances.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Terms such as "include" or "have" are intended to designate the presence of a feature, number, step, component, or combination thereof described in the specification, and it should be understood that it does not preclude the possibility of presence or addition of one or more other features, numbers, steps, components, or combinations thereof.

In addition, "a" and "b" in a description of "a to b carbon atoms" in the present disclosure mean the number of a carbon atom included in a specific functional group. That is, the functional group may include a carbon atom of "a" to "b". For example, "an alkylene group having 1 to 5 carbon atoms" means an alkylene group including carbon atoms of 1 to 5, that is, -CH₂-, -CH₂CH₂-, -CH₂CH₂CH₂-, -CH₂(CH₃)CH-, -CH(CH₃)CH₂-, - CH(CH₃)CH₂CH₂-, etc.

In addition, the "alkylene group" in the present disclosure means a branched or unbranched divalent saturated hydrocarbon group.

In addition, all alkyl group in the present invention may be substituted or unsubstituted. Unless otherwise defined, the "substituted" means that at least one hydrogen bonded to a carbon is substituted with an element other than hydrogen, for example, with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, an aryl group having 6 to 20 carbon atoms, a heteroaryl group having 2 to 20 carbon atoms, a haloaryl group having 6 to 20 carbon atoms, a nitro group, a nitrile group, or the like.

Hereinafter, the present invention will be described in more detail.

### Non-aqueous Electrolyte

A non-aqueous electrolyte according to the present invention may include a lithium salt, an organic solvent, a compound of Formula 1 below as a first additive, and a compound of Formula 2 or 3 below as a second additive.

The non-aqueous electrolyte according to the present invention includes the compound represented by Formula 1 below as the first additive. The compound of Formula 1 below is an oxazolidinone-based compound, and easily forms a film by breaking a cyclic structure on positive electrode and negative electrode surfaces. Specifically, since carbon having a lower electronegativity than nitrogen and oxygen in an oxazolidinone ring also has a lower electron density than the nitrogen and oxygen in the oxazolidinone ring, the carbon is easily reduced on the negative electrode to be capable of forming the film. On the contrary, since oxygen of C=O in the oxazolidinone ring strongly interacts with the positive electrode due to increase of an oxidation number of transition metal of a positive electrode active material on the positive electrode during charging, a ring structure may be broken, and the film may be easily formed. Since the oxazolidinone ring structure is broken into a radical form to cause an additional cross-link reaction, a robust and stable film may be formed. In addition, since the nitrogen and oxygen in the oxazolidinone ring structure have a pair of unshared electrons, when lithium ions are lithiated-delithiated to the positive electrode/negative electrode, a film having a high lithium mobility is formed. Accordingly, the first additive according to the present invention may suppress deterioration of passivation ability of SEI at a high temperature to prevent degradation of the negative electrode and improve performance of a lithium secondary battery.

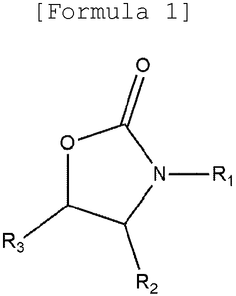

In Formula 1, R₁ may be any one selected from the group consisting of an alkyl group having 1 to 5 carbon atoms that may be substituted with fluorine, an alkenyl group having 2 to 5 carbon atoms that may be substituted with fluorine, an alkynyl group having 2 to 5 carbon atoms that may be substituted with fluorine, SO₂R', and COR'. Preferably, it is preferable that the R₁ is substituted with fluorine. In this case, an organic and inorganic composite film may be formed to form a robust and durable film. The film including an organic component has superior lithium transfer characteristics, but easily cause a side-reaction in an acidic atmosphere of the electrolyte, and an inorganic film suppresses the side-reaction in the acidic atmosphere, but has inferior lithium transfer characteristics. Accordingly, when the organic and inorganic composite film is formed, the overall characteristics of the lithium secondary battery is the most maximized.

The R' may be any one selected from the group consisting of an alkyl group having 1 to 5 carbon atoms that may be substituted with fluorine, an alkenyl group having 2 to 5 carbon atoms that may be substituted with fluorine, and an alkynyl group having 2 to 5 carbon atoms that may be substituted with fluorine.

In Formula 1, R₂ and R₃ may be each independently any one selected from the group consisting of H, an alkyl group having 1 to 5 carbon atoms, and an alkoxy group having 1 to 5 carbon atoms, and preferably R₂ and R₃ may be all H.

Specifically, the compound of Formula 1 above may be any one among compounds represented by Formulae 1-1 to 1-6 below.

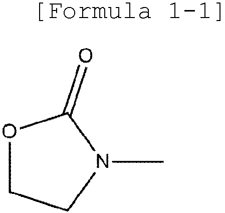

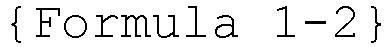

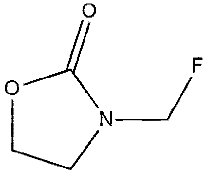

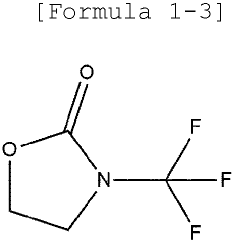

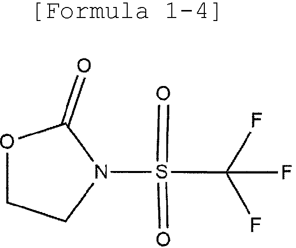

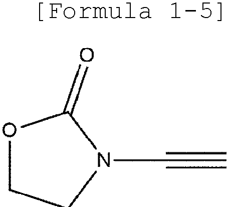

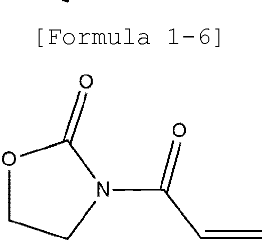

The non-aqueous electrolyte according to the present invention includes the compound represented by Formula 2 or 3 below as the second additive. The compound of Formula 2 or 3 may include a propargyl group to be easily reduced on the negative electrode surface, and to be capable of easily forming a film on the negative electrode surface. The film has higher stability and a lower electronic conductivity than an SEI film formed by reduction decomposition of a general electrolyte to have advantages that an additional decomposition reaction of the electrolyte is suppressed, and the film is not easily damaged by a volume change of the negative electrode. That is, interface stability between the negative electrode and the electrolyte may be secured by using the compound of Formula 2 or 3 as an additive of the electrolyte.

Since the compound of Formula 2 includes the propargyl group having a triple bonding known as having a metal ion adsorption performance, and an oxygen atom, the propargyl group separated by cleavage of a nitrogen (N) atom and a carbon (c) atom of an imidazole group may adsorb to metallic foreign matters such as Fe, Co, Mn, and Ni eluted from the positive electrode during charging at a high voltage to effectively suppress a negative electrode degradation phenomenon that occurs when the foreign matters are electro-deposited on the negative electrode surface. In addition, since in the compound represented by Formula 2, a lone pair of electrons of a nitrogen (N) atom of the imidazole group may react with alkylcarbonate, which is a decomposition product of ethylenecarbonate (EC) used as an organic solvent to be reduced on the negative electrode surface, a stable ion-conductive film may be formed on the negative electrode surface. Accordingly, not only an additional electrolyte decomposition reaction in a charging and discharging process may be suppressed, but also occlusion and release of the lithium ions from the negative electrode may become smooth in overcharging and storing at a high temperature, so that cyclic life characteristics and high-temperature storage performance of the secondary battery may be improved.

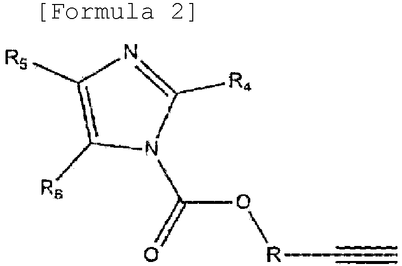

In Formula 2, R may be an alkylene group having 1 to 3 carbon atoms that may be substituted with fluorine, and R₄ to R₆ may be each independently any one selected from the group consisting of H, an alkyl group having 1 to 3 carbon atoms, and a nitrile group.

Specifically, a compound of Formula 2 according to the present invention may be a compound of Formula 2-1 below.

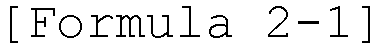

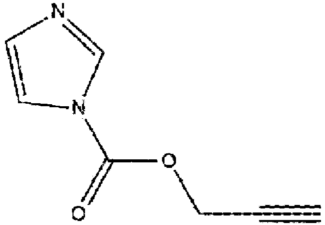

A compound of Formula 3 includes an ester functional group and an unsaturated hydrocarbon group in a molecular structure thereof, and decomposes earlier than any other component of the electrolyte in an initial charging process of the secondary battery to form a film having, as a main component, a compound based on a carbon-oxygen single bond (CO) or a carbon-oxygen double bond (C=O) on the negative electrode surface. Also, the compound of Formula 3 may include the propargyl group to be easily reduced on the negative electrode surface, and to easily form the film on the negative electrode surface. The film has advantages of having higher stability than the SEI film formed by reduction decomposition of the general electrolyte, suppressing an additional decomposition reaction of the electrolyte due to a low electronic conductivity, and not being easily damaged even in a volume change of the negative electrode.

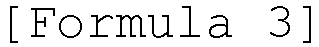

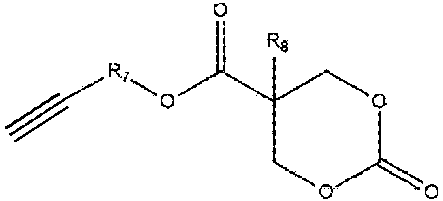

In Formula 3, R₇ may be an alkylene group having 1 to 8 carbon atoms that may be substituted with fluorine, and preferably an alkylene group having 1 to 5 carbon atoms.

In Formula 3, R₈ may be any one selected from the group consisting of H, an alkyl group having 1 to 10 carbon atoms, and a cycloalkyl group having 3 to 8 carbon atoms.

The compound of Formula 3 may be a compound of Formula 3-1 below.

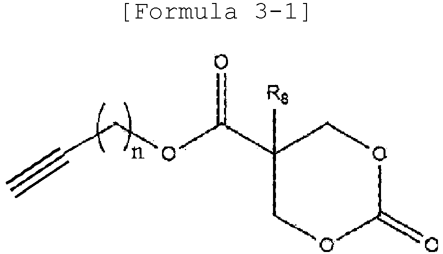

In Formula 3-1 above, n may be a natural number of 1 to 8, preferably a natural number of 1 to 5, and most preferably a natural number of 1 to 3.

In Formula 3-1 above, R₈ may be H, or an alkyl group having 1 to 10 carbon atoms, and preferably H or a methyl group.

Specifically, the compound of Formula 3 according to the present invention may be a compound of Formula 3-2 below.

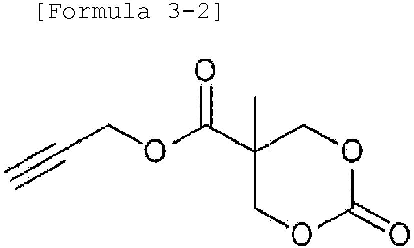

When the non-aqueous electrolyte according to the present invention including the first additive and the second additive is used, a film formation reaction of the second additive is accelerated by a radical generated while a ring structure of the first additive is broken. The film formed by interaction of the first additive and the second additive may have excellent lithium ionic transfer characteristics due to oxazolidinone, imidazole, an annular carbonate structure, or a structure caused thereby between aliphatic alkyl group-based films to improve charging and discharging characteristics and output characteristics of the lithium secondary battery. The film formed by the interaction of the first additive and the second additive may have excellent oxidation resistance to suppress a side reaction occurring on the film of the positive electrode and negative electrode even in the acidic atmosphere of the electrolyte. In addition, the film formed by the interaction of the first additive and the second additive has excellent durability even against volume expansion of the negative electrode occurring during charging and discharging. Therefore, the non-aqueous electrolyte according to the present invention may form an electrode-electrolyte interface stable and durable at a high temperature, and may suppress an unnecessary electrolyte decomposition side-reaction, thereby performing the lithium secondary battery with improved overall performances.

The first additive in the non-aqueous electrolyte according to the present invention may be included in an amount of 0.01 parts by weight to 10 parts by weight, or 0.01 parts by weight to 5 parts by weight, based on 100 parts by weight of the non-aqueous electrolyte, preferably 0.05 parts by weight to 3.0 parts by weight, and more preferably 0.10 parts by weight to 2.0 parts by weight. When a content of the first additive satisfies the range, there is a sufficient film formation effect on the negative electrode, and thus there is an excellent effect on life characteristics and storage characteristics at a high temperature.

The second additive in the non-aqueous electrolyte according to the present invention may be included in an amount of 0.01 parts by weight to 5 parts by weight, based on 100 parts by weight of the non-aqueous electrolyte, preferably 0.05 parts by weight to 3.0 parts by weight, and more preferably 0.10 parts by weight to 2.5 parts by weight. When a content of the second additive satisfies the range, there is a sufficient film formation effect on the negative electrode, and thus there is an excellent effect in life characteristics and storage characteristics at a high temperature.

The first additive and the second additive in the non-aqueous electrolyte according to the present invention may be included in a ratio of 1:0.001 to 1:500 part by weight, or 1:0.002 to 1:500 parts by weight, preferably 1:0.01 to 1:300 parts by weight, and most preferably 1:0.02 to 1:250 parts by weight. When the range is satisfied, elasticity of the SEI film may be in an appropriate range so that the SEI film may be robustly maintained during charging and discharging or at a high temperature.

The non-aqueous electrolyte according to the present invention may include a lithium salt. The lithium salt is used as an electrolyte salt in the lithium secondary battery, and a medium for transferring ions. Typically, the lithium salt may include, for example, Li⁺ as a cation, and may include, as an anion, at least any one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻.

Specifically, the lithium salt may include a single material or a mixture of two or more material selected from the group consisting of LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂ (lithium bis(fluorosulfonyl) imide; LiFSI), LiN(SO₂CF₂CF₃)₂ (lithium bis(perfluoroethanesulfonyl)imide; LiBETI), and LiN(SO₂CF₃)₂ (lithium bis(trifluoromethanesulfonyl)imide; LiTFSI). The lithium salt generally used in the electrolyte of the lithium secondary battery except therefor may be used without limitation.

The lithium salt may be appropriately changed in a typically usable range, but may be included, so as to get an optimized film formation effect for preventing corrosion on an electrode surface, at a concentration of 0.5 M to 5.0 M in the electrolyte, preferably 1.0 M to 3.0 M, and more preferably 1.2 M to 2.0 M. When a concentration of the lithium salt satisfies the range, there may be a sufficient effect of improving cyclic characteristics when the lithium secondary battery is stored at a high temperature, and electrolyte impregnability may be improved due to appropriate viscosity of the non-aqueous electrolyte.

The non-aqueous electrolyte according to the present invention may include an organic solvent. The organic solvent may include at least one selected from the group consisting of a cyclic carbonate-based organic solvent, a linear carbonate-based organic solvent, a linear ester-based organic solvent, and a cyclic ester-based organic solvent.

When the cyclic carbonate solvent is used, the additive according to the present invention is especially effective. When a typical electrolyte additive is used with the cyclic carbonate solvent together, there is a limitation that it is difficult to maintain the SEI film formed by decomposition of the cyclic carbonate solvent due to the volume change of the negative electrode generated during cycling, and thus decomposition of the solvent continuously occurs. Accordingly, there is a limitation that ionic conductivity of the electrolyte decreases, and thus cyclic characteristics deteriorates. However, when a combination of the cyclic carbonate solvent and the additive according to the present invention is used, a robust SEI film is formed, and thus there is an effect of maintaining excellent cyclic characteristics.

The cyclic carbonate-based organic solvent is an organic solvent having high viscosity, and capable of dissociating the lithium salt in the electrolyte well due to high dielectric constant thereof, may include, as a specific example, at least one selected from the group consisting of ethylenecarbonate (EC), propylenecarbonate (PC), fluoroethylenecarbonate (FEC), 1,2-butylenecarbonate, 2,3-butylenecarbonate, 1,2-pentylenecarbonate, 2,3-pentylenecarbonate,and vinylenecarbonate, and may include fluoroethylenecarbonate (FEC)thereamong .

In addition, the linear carbonate-based organic solvent has a low viscosity and dielectric constant, may include, as a representative example, at least one selected from the group consisting of dimethylcarbonate (DMC), diethylcarbonate (DEC), dipropylcarbonate, ethylmethylcarbonate (EMC), methylpropylcarbonate, and ethylpropylcarbonate, and may include diethylcarbonate (DEC) thereamong.

In addition, in order to manufacture an electrolyte having a high ionic conductivity, at least one ester-based organic solvent selected from the group consisting of the linear ester-based organic solvent, and the cyclic ester-based organic solvent may be additionally included in at least one carbonate-based organic solvent selected from the group consisting of the cyclic carbonate-based organic solvent and the linear carbonate-based organic solvent.

The linear ester-based organic solvent may be, as a specific example, at least one selected from the group consisting of methylacetate, ethylacetate, propylacetate, methylpropionate, ethylpropionate, propylpropionate,butylpropionate.

In addition, the cyclic ester-based organic solvent may be at least one selected from the group consisting of γ-butyrolactone, γ-valerolactone, γ-caprolactone, σ-valerolactone, ε-caprolactone.

Meanwhile, the organic solvent may be used by adding, without limitation, an organic solvent typically used in the non-aqueous electrolyte as needed. For example, at least one of an ether-based organic solvent, a glyme-based solvent, or a nitrile-based organic solvent may be additionally included.

Any one, or a mixture of two or more selected from the group consisting of dimethylether, diethylether, dipropylether, methylethylether, methylpropylether, ethylpropylether, 1,3-dioxolane (DOL), and 2,2-bis(trifluoromethyl)-1,3-dioxolane (TFDOL) may be used as the ether-based solvent, but the ether -based solvent is not limited thereto.

The glyme-based solvent is a solvent having a higher dielectric constant, a lower surface tension, and a less reactivity with metal than the linear carbonate-based organic solvent, and may include at least one selected from the group consisting of dimethoxyethane (glyme, DME), diethoxyethane, diglyme, triglyme, and tetra-glyme (TEGDME), but the glyme-based solvent is not limited thereto.

The nitrile-based solvent may be at least one selected from the group consisting of acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but the nitrile-based solvent is not limited thereto.

In addition, the non-aqueous electrolyte according to the present invention may additionally include a well-known electrolyte additive therein as needed so as to prevent negative electrode collapse caused by decomposition of the non-aqueous electrolyte, or to further improve low-temperature high-efficiency discharging characteristics, high-temperature stability, overcharging prevention, an effect of suppressing expansion of a battery at a high temperature, etc.

This additional electrolyte additive may include, as a representative example, at least one SEI film formation additive selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may be vinylenecarbonate (VC), or vinylethylenecarbonate.

The halogen-substituted carbonate-based compound may be fluoroethylenecarbonate (FEC).

The sultone-based compound may be at least one compound selected from the group consisting of 1,3-propanesultone (PS), 1,4-butanesultone, ethenesultone, 1,3-propenesultone (PRS), 1,4-butenesultone, and 1-methyl-1,3-propenesultone.

The sulfate-based compound may be ethylenesulfate (Esa), trimethylenesulfate (TMS), or methyltrimethylene sulfate (MTMS).

The phosphate-based compound may be at least one selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate,and tris(2,2,2-trifluoroethyl)phosphite.

The borate-based compound may be tetraphenylborate, lithium difluoro(oxalato)borate (LiODFB), and lithium bisoxalatoborate (LiB(C₂O₄)₂, LiBOB).

The nitrile-based compound may be at least one selected from the group consisting of succinonitrile, adiponitrile, acetonitrile, propionitrile, butyronitrile, valeronitrile, caprylonitrile, heptanenitrile, cyclopentane carbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be fluorobenzene, the amine-based compound may be triethanolamine, ethylenediamine, or the like, and the silane-based compound may be tetravinylsilane.

The lithium salt-based compound is a compound different from the lithium salt included in the non-aqueous electrolyte, and may be lithium difluorophosphate (LIDFP), LiPO₂F₂, LiBF₄, or the like.

When a combination of vinylcarbonate (VC), 1,3-propanesultone (PS), ethylenesulfate (Esa), and lithium difluorophosphate (LiDFP) among these additional electrolyte additives is additionally included, a more robust SEI film may be formed on the negative electrode surface in an initial activation process of the secondary battery, and high-temperature stability of the secondary battery may be improved by suppressing gas generation caused by decomposition of the electrolyte at a high temperature.

Meanwhile, at least two of the additional electrolyte additives may be mixed and used, and the additional electrolyte additives may be in an amount of 0.050% to 20% by weight based on the total weight of the non-aqueous electrolyte, specifically 0.10% to 15% by weight, preferably 0.30% to 10% by weight. When a content of the additional electrolyte additive satisfies the range, effects of improving ionic conductivity and cyclic characteristics become more excellent.

### Lithium secondary battery

The present invention provides a lithium secondary battery including the non-aqueous electrolyte.

Specifically, the lithium secondary battery includes a positive electrode including a positive electrode active material, a negative electrode including a negative electrode active material, a separator interposed between the positive electrode and the negative electrode, and the non-aqueous electrolyte described above.

In this case, the lithium secondary battery according to the present invention may be manufactured according to a method typically known in the technical field. For example, the lithium secondary battery according to the present invention may be manufactured by, after sequentially stacking a positive electrode, a negative electrode, and a separator between the positive electrode and the negative electrode to form an electrode assembly, inserting the electrode assembly into an inside of a battery case, and injecting the non-aqueous electrolyte according to the present invention.

### (1) Positive electrode

The positive electrode may be manufactured by applying, on a positive electrode current collector, a positive electrode mixture slurry including a positive electrode active material, a binder, a conductive material, a solvent, etc.

As long as having a conductivity without causing a chemical change in the battery, the positive electrode current collector is not specially limited, and for example, stainless steel, aluminum, nickel, titanium, calcined carbon, or aluminum or stainless steel of which a surface is treated with carbon, nickel, titanium, silver, or the like may be used as the positive electrode current collector.

The positive electrode active material is a compound capable of reversibly intercalating and deintercalating lithium, and specifically includes a lithium metal oxide including lithium and at least one metal such as cobalt, manganese, nickel, or aluminum. More specifically, the lithium metal oxide may be a lithium-manganese oxide (e.g. LiMnO₂, LiMn₂O₄, etc.), a lithium-cobalt oxide (e.g. LiCoO₂, etc.), a lithium-nickel oxide (e.g. LiNiO₂, etc.), a lithium-nickel-manganese oxide (e.g. LiNi_{1-Y}Mn_{Y}O₂ (where, 0<Y<1), LiMn_{2-Z}Ni_{Z}O₄ (where, 0<Z<2)), a lithium-nickel-cobalt oxide (e.g. LiNi_{1-Y1}Co_{Y1}O₂ (where, 0<Y1<1) ), a lithium-manganese-cobalt oxide (e.g. LiCo_{1-Y2}Mn_{Y2}O₂ (where, 0<Y2<1), LiMn_{2-Z1}Co_{Z1}O₄ (where, 0<Z1<2)), a lithium-nickel-manganese-cobalt oxide (e.g. Li (NiₚCo_{q}Mnᵣ)O₂ (where, 0<p<1, 0<q<1, 0<r<1, p+q+r=1), Li(Niₚ₁Co_{q1}Mnᵣ₁)O₄ (where, 0<p1<2, 0<q1<2, 0<r1<2, p1+q1+r1=2), or the like), a lithium-nickel-cobalt-transition metal (M) oxide (e.g. Li(Niₚ₂Co_{q2}Mnᵣ₂Mₛ₂)O₂ (where, M is selected from the group consisting of Al, Fe, V, Cr, Ti, Ta, Mg, and Mo, and p2, q2, r2 and s2 are atomic fractions of independent elements, respectively, such as 0<p2<1, 0<q2<1, 0<r2<1, 0<s2<1, p2+q2+r2+s2=1), or the like), or the like, and may include a compound having any one, or at least two thereof.

In order to increase capacity characteristics and stability of the battery, the lithium metal oxide may be, thereamong, LiCoO₂, LiMnO₂, LiNiO₂, a lithium-nickel-manganese-cobalt oxide (e.g. Li (Ni_{1/3}Mn_{1/3}Co_{1/3})O₂, Li (Ni_{0.6}Mn_{0.2}Co_{0.2})O₂, Li(Ni_{0.5}Mn_{0.3}Co_{0.2})O₂ , Li(Ni_{0.7}Mn_{0.15}Co_{0.15})O₂, Li(Ni_{0.8}Mn_{0.1}Co_{0.1})O₂, and the like), or a lithium-nickel-cobalt-aluminum oxide (e.g. Li(Ni_{0.8}Co_{0.15}Al_{0.05})O₂, and the like), and any one or a mixture of at least two thereamong may be used.

In order to maximize capacity characteristics of the battery, the positive electrode active material having a nickel content of at least 80 atm% may be used. For example, the lithium transition metal oxide may include a compound represented by Formula 4 below.

[Formula 4] LiₓNiₐCo_{b}M¹_{c}M²_{d}O₂

In Formula 4 above, the M¹ may be at least one selected from Mn and Al, and preferably Mn, or a combination of Mn and Al.

M² may be at least one selected from the group consisting of Zr, W, Y, Ba, Ca, Ti, Mg, Ta, and Nb.

The x is an atomic fraction of lithium in the lithium transition metal oxide, and may be 0.90≤x≤1.1, preferably 0.95≤x≤1.08, and more preferably 1.0≤x≤1.08.

The a is an atomic fraction of nickel among metal elements other than lithium in the lithium transition metal oxide, and may be 0.80≤a<1.0, preferably 0.80≤a≤0.95, and more preferably 0.85≤a≤0.90.

The b is an atomic fraction of cobalt among the metal elements other than lithium in the lithium transition metal oxide, and may be 0<b<0.2, preferably 0<b≤0.15, and more preferably 0.01≤b≤0.10.

The c is an atomic fraction of M¹ among the metal elements other than lithium in the lithium transition metal oxide, and may be 0<c<0.2, preferably 0<c≤0.15, and more preferably 0.01≤c≤0.10.

The d is an atomic fraction of M² among the metal elements other than lithium in the lithium transition metal oxide, and may be 0≤d≤0.1, and preferably 0≤d≤0.05.

The positive electrode active material may be included in an amount of 60% to 99% by weight, preferably 70% to 99% by weight, and more preferably 80% to 98% by weight based on the total weight of solids excluding solvent of the positive electrode mixture slurry.

The binder is a component helping coupling of an active material and a conductive material, and coupling to the current collector.

The binder may be, for example, polyvinylidenefluoride, polyvinylalcohol, starch, hydroxypropylcellulose, regenerated cellulose, polyvinylpyrrolidone, polytetrafluoroethylene, polyethylene (PE), polypropylene, ethylene-propylene-diene monomer, sulfonated ethylene-propylene-diene monomer, styrene-butadiene rubber, fluorine rubber, various copolymers, or the like.

Typically, the binder may be included in an amount of 1 to 20% by weight, preferably 1 to 15% by weight, and more preferably 1 to 10% by weight, based on the total weight of solid excluding solvent in the positive electrode mixture slurry.

The conductive material is a component for further improving a conductivity of the positive electrode active material, and may be added in an amount of 1 to 20% by weight based on the total weight of solid of the positive electrode mixture slurry. As long as having a conductivity without causing a chemical change in the battery, the conductive material is not specially limited, and carbon powders such as carbon black, acetylene black, ketjen black, channel black, furnace black, lamp black, or thermal black; graphite powders such as natural graphite, artificial graphite, or graphite with a highly developed crystal structure; a conductive fiber such as a carbon fiber or a metal fiber; fluorinated carbon powders; conductive powders such as aluminum powders or nickel powders; a conductive whisker such as zinc oxide or potassium titanate; a conductive metal oxide such as titanium oxide; a conductive material such as a polyphenylene derivative, or the like may be used as the conductive material.

Typically, the conductive material may be included in an amount of 1 to 20% by weight, preferably 1 to 15% by weight, and more preferably 1 to 10% by weight based on the total weight of solid excluding solvent of the positive electrode mixture slurry.

The solvent may include an organic solvent such as N-methyl-2-pyrollidone (NMP), and may be used in an amount providing a preferable viscosity when the positive electrode active material, and optionally the binder and the conductive material are included. For example, the solvent may be included in order that a concentration of the solid including the positive electrode active material, and optionally the binder and the conductive material is 50 to 95% by weight, preferably 70 to 95% by weight, and more preferably 70 to 90% by weight.

### (2) Negative electrode

The negative electrode may be, for example, manufactured by applying, on a negative electrode current collector, a negative electrode mixture slurry including a negative electrode active material, a binder, a conductive material, a solvent, etc., or a graphite electrode composed of carbon (C), or metal itself may be used as the negative electrode.

For example, when the negative electrode is manufactured by applying the negative electrode mixture slurry on the negative electrode current collector, the negative electrode current collector generally has a thickness of 3 to 500 µm. As long as having a high conductivity without causing a chemical change in the battery, the negative electrode current collector is not specially limited, and for example, copper, stainless steel, aluminum, nickel, titanium, calcined carbon, copper or stainless steel of which a surface is treated with carbon, nickel, titanium, silver, or the like, aluminum-cadmium alloy, or the like may be used as the negative electrode current collector. In addition, like the positive electrode current collector, a binding force of the negative electrode active material may be strengthened by forming a fine irregularity on the surface of the negative electrode current collector, and the negative electrode current collector may be used in various forms such as a film, a sheet, a foil, a net, a porous body, a foam, a non-woven fabric, or the like.

In addition, the negative electrode active material may include at least one selected from the group consisting of lithium metal, a carbon material capable of reversibly intercalating/deintercalating lithium ions, metal or an alloy of the metal and lithium, a metal complex oxide, a material capable of doping and dedoping lithium, and a transition metal oxide.

As long as being a carbon-based negative electrode active material generally used in the lithium ion secondary battery, the carbon material capable of reversibly intercalating/deintercalating the lithium ions may be used without special limitation, and as a representative example thereof, crystalline carbon, or amorphous carbon may be used alone or together. An example of the crystalline carbon may be graphite such as natural graphite or artificial graphite having an irregular, plate-like, flake, spherical, or fibrous shape. Examples of the amorphous carbon are soft carbon (low-temperature calcined carbon) or hard carbon, mesophase pitch carbide, calcined coke, etc.

The metal, or the alloy of the metal and lithium may be metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium.

The metal complex oxide may be a material selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, and Ge; Me': Al, B, P, Si, elements of groups 1, 2, and 3 of the periodic table, and halogen; 0<x≤1; 1≤y≤3; 1≤z≤8).

The material capable of doping and dedoping lithium may be Si, SiOₓ (0<x≤2), a Si-Y alloy (the Y is an element selected from the group consisting of alkali metal, alkaline earth metal, a group 13 element, a group 14 element, transition metal, a rare earth element, and a combination thereof, but not Si), Sn, SnO₂, Sn-Y (the Y is an element selected from the group consisting of alkali metal, alkaline earth metal, a group 13 element, a group 14 element, transition metal, a rare earth element, and a combination thereof, but not Sn), etc., and at least one thereof and SiO₂ may be mixed and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium complex oxide (LTO), a vanadium oxide, a lithium-vanadium oxide, etc.

When Si or SiOₓ (0<x≤2) is used as the negative electrode active material, the additive according to the present invention is effective. Specifically, when a Si-based negative electrode active material is used, if a robust solid SEI layer is not formed on the negative electrode surface during initial activation, deterioration of life characteristics is accelerated by extreme volume expansion-contraction during cycling. However, the additive according to the present invention may form an elastic and robust SEI layer so that life characteristics and storage characteristics of the secondary battery using the Si-based negative electrode active material may become excellent.

The negative electrode active material may be included in an amount of 60 to 99% by weight, preferably 70 to 99% by weight, and more preferably 80 to 98% by weight based on the total weight of solid of the negative electrode mixture slurry.

For example, the binder may be polyvinylidenefluoride (PVDF), polyvinylalcohol, starch, hydroxypropylcellulose, regenerated cellulose, polyvinylpyrrolidone, polytetrafluoroethylene, polyethylene, polypropylene, ethylene-propylene-diene monomer, sulfonated ethylene-propylene-diene monomer, styrene-butadiene rubber, fluorine rubber, and various copolymers thereof. Specifically, styrene-butadiene rubber (SBR)-carboxymethylcellulose (CMC) may be used due to high viscosity thereof.

Typically, the binder may be included in an amount of 1 to 20% by weight, preferably 1 to 15% by weight, and more preferably 1 to 10% by weight based on the total weight of solid excluding solvent of the negative electrode mixture slurry.

The conductive material is a component for further improving a conductivity of the negative electrode active material, and may be added in an amount of 1 to 20% by weight based on the total weight of solid of the negative electrode mixture slurry. As long as having a conductivity without causing a chemical change in the battery, the conductive material is not specially limited, and for example, carbon powders such as carbon black, acetylene black, Ketjen black, channel black, furnace black, lamp black, or thermal black; graphite powders such as natural graphite, artificial graphite, or graphite with a highly developed crystal structure; a conductive fiber such as a carbon fiber and a metal fiber; fluorinated carbon powders; conductive powders such as aluminum powders and nickel powders; a conductive whisker such as zinc oxide and potassium titanate; a conductive metal oxide such as titanium oxide; a conductive material such as a polyphenylene derivative, or the like may be used as the conductive material.

The conductive material may be included in an amount of 1 to 20% by weight, preferably 1 to 15% by weight, and more preferably 1 to 10% by weight based on the total weight of solid excluding solvent of the negative electrode mixture slurry.

The solvent may include an organic solvent such as water or N-methyl-2-pyrollidone (NMP), and may be used in an amount providing a preferable viscosity, when the negative electrode active material, and optionally a binder and a conductive material are included. For example, the solvent may be included in order that a concentration of the solid including the negative electrode active material, and optionally the binder and the conductive material is 50 to 95% by weight, and preferably 70 to 90% by weight.

When the metal itself is used, the negative electrode may be manufactured in a method of physically bonding, rolling, or depositing metal on a metal thin-film itself or the negative electrode current collector. The method of depositing may be a method of electrically or chemically depositing the metal.

For example, the metal thin-film itself or the metal bonded/rolled/deposited on the negative electrode current collector may include one metal or an alloy of two metals selected from the group consisting of lithium (Li), nickel (Ni), tin (Sn), copper (Cu), and indium (In).

### (3) Separator

In addition, a porous polymer film typically used as a separator, for example, a porous polymer film manufactured from a polyolefin-based polymer such as ethylene homopolymer, propylene homopolymer, ethylene/butene copolymer, ethylene/hexene copolymer, and ethylene/methacrylate copolymer may be used alone or by stacking the same as the separator, or a typical porous non-woven fabric, for example, a non-woven fabric made of a glass fiber having a high meting point, a polyethyleneterephthalate fiber, or the like may be used, but the separator is not limited thereto. In addition, a coated separator including a ceramic component or a polymer material may be used so as to secure a heat resistance or a mechanical strength, and the separator may be selectively used in a single- or multi-layered structure.

Specifically, a safety reinforced separator (SRS) on which a coating layer including the ceramic component or the polymer material is formed so as to secure the heat resistance or the mechanical strength may be used as a separator included in the electrode assembly according to the present invention.

Specifically, the separators included in the electrode assembly according to the present invention may include a porous separation base material, and a porous coating layer totally applied on one surface or both surfaces of the separation base material, and the coating layer may include a mixture of inorganic particles selected from a metal oxide, a metalloid oxide, a metal fluoride, a metal hydroxide, and a combination thereof, and a binder polymer mutually connecting and fixing the inorganic particles.

The coating layer may include, as the inorganic particles, at least one selected from Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, and MgF₂. In this case, the inorganic particles may improve thermal stability of the separator. That is, the inorganic particles may prevent the separator from being contracted at a high temperature. In addition, the binder polymer may fix the inorganic particles to improve mechanical stability of the separator.

An external form of the lithium secondary battery according to the present invention is not specially limited, but may be a cylindrical form using a can, an angular form, a pouch form, a coin form, or the like.

Hereinafter, the present invention will be described in more detail through specific Examples. However, the following Examples are just examples for helping understanding of the present invention, and do not limit the scope of the present invention.

### Examples

### Example 1

### (Preparation of non-aqueous electrolyte)

A non-aqueous solvent was prepared by dissolving LiPF₆ in an organic solvent (having a volume ratio of ethylene carbonate (EC) :ethylmethyl carbonate (EMC) :diethyl carbonate (DEC)=20:70:10) to become 1.2 M, and a non-aqueous electrolyte is manufactured by putting a compound of Formula 1-1 below of 0.01 g and a compound of Formula 2-1 below of 0.01 g into the non-aqueous solvent of 99.98g.

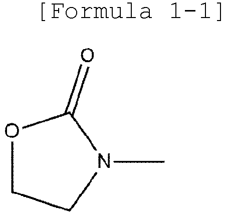

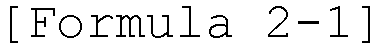

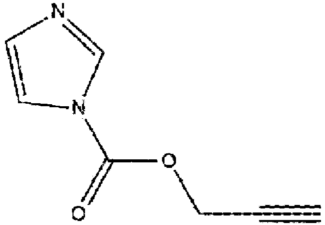

### (Manufacturing of lithium secondary battery)

A positive electrode slurry (solid of 75.5% by weight) was manufactured by adding a positive electrode active material (LiNi_{0.85}Co_{0.05}Mn_{0.08}Al_{0.02}O₂), a conductive material (carbon nanotube), and a binder (polyvinylidenefluoride) to a solvent, N-methyl-2-pyrollidone (NMP) at a weight ratio of 97.74:0.7:1.56. A positive electrode was manufactured by applying, drying, and roll-pressing the positive electrode slurry on one surface of a positive electrode current collector (an aluminum thin-film) having a thickness of 15 µm.

A negative electrode slurry was manufactured by adding a negative electrode active material (Si), a conductive material (carbon black), and a binder (styrene-butadienerubber (SBR)-carboxymethylcellulose (CMC)) to a solvent, N-methly-2-pyrollidone (NMP) at a weight ratio of 70:20.3:9.7. A negative electrode is manufactured by applying, drying, and roll-pressing the negative electrode slurry on one surface of a negative electrode current collector (a copper thin-film) having a thickness of 15 µm.

A secondary battery was manufactured by interposing a polyolefin-based porous separator applied with inorganic particles of Al₂O₃ between the manufactured positive electrode and negative electrode in a dry room, and then pouring the manufactured non-aqueous electrolyte.

### Example 2

A secondary battery was manufactured by the same method as Example 1 except that the non-aqueous electrolyte was prepared by introducing 0.01 g of a compound of Formula 1-1 and 0.01 g of a compound of Formula 3-2 below into 99.98 g of the non-aqueous solvent prepared in Example 1.

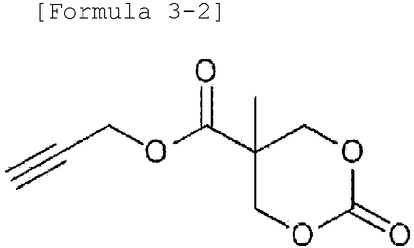

### Example 3

A secondary battery was manufactured by the same method as Example 1 except that the non-aqueous electrolyte was prepared by introducing 0.01 g of a compound of Formula 1-1 and 5 g of a compound of Formula 2-1 into 94.99 g of the non-aqueous solvent prepared in Example 1.

### Example 4

A secondary battery was manufactured by the same method as Example 1 except that the non-aqueous electrolyte was prepared by introducing 0.01 g of a compound of Formula 1-1 and 5 g of a compound of Formula 3-2 into 94.99 g of the non-aqueous solvent prepared in Example 1.

### Example 5

A secondary battery was manufactured by the same method as Example 1 except that the non-aqueous electrolyte was prepared by introducing 10 g of a compound of Formula 1-1 and 0.01 g of a compound of Formula 2-1 into 89.99 g of the non-aqueous solvent prepared in Example 1.

### Example 6

A secondary battery was manufactured by the same method as Example 1 except that the non-aqueous electrolyte was prepared by introducing 10 g of a compound of Formula 1-1 and 0.01 g of a compound of Formula 3-2 into 89.99 g of the non-aqueous solvent prepared in Example 1.

### Example 7

A secondary battery was manufactured by the same method as Example 1 except that the non-aqueous electrolyte was prepared by introducing 10 g of a compound of Formula 1-1 and 5 g of a compound of Formula 2-1 into 85 g of the non-aqueous solvent prepared in Example 1.

### Example 8

A secondary battery was manufactured by the same method as Example 1 except that the non-aqueous electrolyte was prepared by introducing 10 g of a compound of Formula 1-1 and 5 g of a compound of Formula 3-2 into 85 g of the non-aqueous solvent prepared in Example 1.

### Example 9

A secondary battery was manufactured by the same method as Example 1 except that the non-aqueous electrolyte was prepared by introducing 0.01 g of a compound of Formula 1-2 below and 0.01 g of a compound of Formula 2-1 into 99.98 g of the non-aqueous solvent prepared in Example 1.

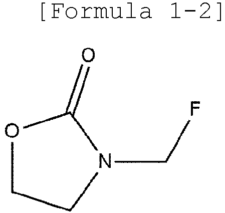

### Example 10

A secondary battery was manufactured by the same method as Example 1 except that the non-aqueous electrolyte was prepared by introducing 0.01 g of a compound of Formula 1-3 below and 0.01 g of a compound of Formula 2-1 into 99.98 g of the non-aqueous solvent prepared in Example 1.

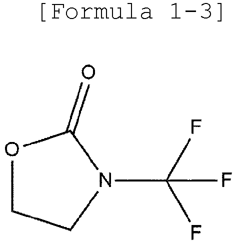

### Example 11

A secondary battery was manufactured by the same method as Example 1 except that the non-aqueous electrolyte was prepared by introducing 0.01 g of a compound of Formula 1-4 below and 0.01 g of a compound of Formula 2-1 into 99.98 g of the non-aqueous solvent prepared in Example 1.

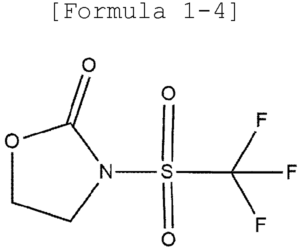

### Example 12

A secondary battery was manufactured by the same method as Example 1 except that the non-aqueous electrolyte was prepared by introducing 0.01 g of a compound of Formula 1-5 below and 0.01 g of a compound of Formula 2-1 into 99.98 g of the non-aqueous solvent prepared in Example 1.

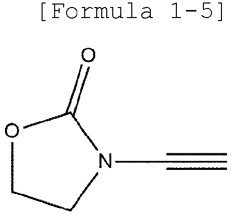

### Example 13

A secondary battery was manufactured by the same method as Example 1 except that the non-aqueous electrolyte was prepared by introducing 0.01 g of a compound of Formula 1-6 below and 0.01 g of a compound of Formula 2-1 into 99.98 g of the non-aqueous solvent prepared in Example 1.

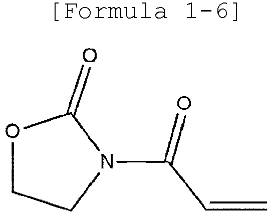

### Comparative Example 1

A secondary battery was manufactured by the same method as Example 1 except that the non-aqueous electrolyte was prepared by introducing 0.01 g of a compound of Formula 1-1 into 99.99 g of the non-aqueous solvent prepared in Example 1.

### Comparative Example 2

A secondary battery was manufactured by the same method as Example 1 except that the non-aqueous electrolyte was prepared by introducing 10 g of a compound of Formula 1-1 into 90 g of the non-aqueous solvent prepared in Example 1.

### Comparative Example 3

A secondary battery was manufactured by the same method as Example 1 except that the non-aqueous electrolyte was prepared by introducing 0.01 g of a compound of Formula 2-1 into 99.99 g of the non-aqueous solvent prepared in Example 1.

### Comparative Example 4

A secondary battery was manufactured by the same method as Example 1 except that the non-aqueous electrolyte was prepared by introducing 5 g of a compound of Formula 2-1 into 95 g of the non-aqueous solvent prepared in Example 1.

### Comparative Example 5

A secondary battery was manufactured by the same method as Example 1 except that the non-aqueous electrolyte was prepared by introducing 0.01 g of a compound of Formula 3-2 into 99.99 g of the non-aqueous solvent prepared in Example 1.

### Comparative Example 6

A secondary battery was manufactured by the same method as Example 1 except that the non-aqueous electrolyte was prepared by introducing 5 g of a compound of Formula 3-2 into 95 g of the non-aqueous solvent prepared in Example 1.

### Experimental Example 1 - Evaluation of high-temperature cycle characteristics

Cycle characteristics were evaluated for each of secondary batteries manufactured in Examples 1 to 13, and Comparative Examples 1 to 6.

Specifically, 200 cycles of charging and discharging were performed for each of the batteries manufactured in Examples 1 to 13 and Comparative Examples 1 to 6 with each cycle consisting of charging up to 4.2 V at a rate of 0.33 C under constant current/constant voltage conditions at 45°C, followed by discharging to 3.0 V at a constant current of 0.33 C, and then capacity maintenance rates of the batteries after 200 cycles relative to initial capacities of the batteries after 1 cycle were measured. In addition, resistance increase rates of the batteries after 200 cycles relative to initial resistances of the batteries after 1 cycle were measured. The results are shown in Table 1 below.

**[Table 1]**

| | Capacity maintenance rate (%) | Resistance increase rate(%) |
|---|---|---|
| Example 1 | 90 | 6 |
| Example 2 | 92 | 8 |
| Example 3 | 91 | 8 |
| Example 4 | 90 | 6 |
| Example 5 | 91 | 8 |
| Example 6 | 90 | 7 |
| Example 7 | 91 | 7 |
| Example 8 | 90 | 6 |
| Example 9 | 90 | 6 |
| Example 10 | 90 | 5 |
| Example 11 | 91 | 7 |
| Example 12 | 90 | 5 |
| Example 13 | 91 | 7 |
| Comparative Example 1 | 84 | 19 |
| Comparative Example 2 | 82 | 20 |
| Comparative Example 3 | 81 | 17 |
| Comparative Example 4 | 84 | 20 |
| Comparative Example 5 | 84 | 19 |
| Comparative Example 6 | 82 | 19 |

### Experimental Example 2 - Evaluation of high-temperature storage characteristics

High-temperature storage characteristics were evaluated for each of the secondary batteries manufactured in Examples 1 to 13 and Comparative Examples 1 to 6.

Specifically, after fully charging up to 4.2 V, each of the secondary batteries of Examples 1 to 13 and Comparative Examples 1 to 6 was preserved at 60°C for 8 weeks.

Before preservation, capacities of the fully charged secondary batteries were measured and set as capacities of initial secondary batteries.

After 8 weeks, capacities of the preserved secondary batteries were measured to calculate reduced capacities for a storage period of 8 weeks. Capacity maintenance rates after 8 weeks were deduced by calculating percentage ratios of reduced capacities to the initial capacities of the secondary batteries. In addition, resistance increase rates after 8 weeks were deduced by calculating percentage ratios of increased resistances to the initial resistances of the secondary batteries. The results are shown in Table 2 below.

**[Table 2]**

| | Capacity maintenance rate (%) | Resistance increase rate (%) |
|---|---|---|
| Example 1 | 95 | 7 |
| Example 2 | 96 | 8 |
| Example 3 | 95 | 7 |
| Example 4 | 95 | 7 |
| Example 5 | 96 | 7 |
| Example 6 | 94 | 6 |
| Example 7 | 95 | 8 |
| Example 8 | 94 | 7 |
| Example 9 | 95 | 7 |
| Example 10 | 96 | 9 |
| Example 11 | 94 | 6 |
| Example 12 | 96 | 8 |
| Example 13 | 95 | 7 |
| Comparative Example 1 | 85 | 16 |
| Comparative Example 2 | 87 | 21 |
| Comparative Example 3 | 86 | 20 |
| Comparative Example 4 | 85 | 17 |
| Comparative Example 5 | 86 | 20 |
| Comparative Example 6 | 83 | 17 |

### Experimental Example 3 - Evaluation of thermal stability

Thermal stability was evaluated for each of the secondary batteries manufactured in Examples 1 to 13 and Comparative Examples 1 to 6.

Specifically, after a formation process, lithium secondary batteries manufactured in Examples and Comparative Examples were charged (0.05 C cut off) under constant current/constant voltage conditions up to 4.2 V at a rate of 0.33 C at 25°C to fully charge up to 100% of SOC. Hot box evaluation experiment to confirm whether or not ignition occurs when the fully charged batteries are heated to 140°C at a heating rate of 5°C/min and left for 1 hour was performed. A case in which ignition did not occur was evaluated as 'Pass', and a case in which ignition occurred was evaluated as 'Fail', and the results are shown in Table 3 below.

**[Table 3]**

| | Hot box test result |
|---|---|
| Example 1 | Pass |
| Example 2 | Pass |
| Example 3 | Pass |
| Example 4 | Pass |
| Example 5 | Pass |
| Example 6 | Pass |
| Example 7 | Pass |
| Example 8 | Pass |
| Example 9 | Pass |
| Example 10 | Pass |
| Example 11 | Pass |
| Example 12 | Pass |
| Example 13 | Pass |
| Comparative Example 1 | Fail |
| Comparative Example 2 | Pass |
| Comparative Example 3 | Fail |
| Comparative Example 4 | Fail |
| Comparative Example 5 | Fail |
| Comparative Example 6 | Fail |

## Claims

1. A non-aqueous electrolyte comprising:
a lithium salt;
an organic solvent;
a compound of Formula 1 below as a first additive; and
a compound of Formula 2 or Formula 3 below as a second additive, 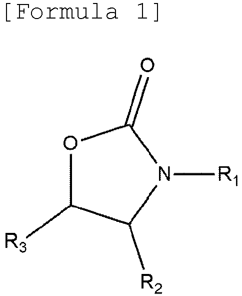
wherein in Formula 1 above, R₁ is any one selected from the group consisting of an alkyl group having 1 to 5 carbon atoms capable of being substituted with fluorine, an alkenyl group having 2 to 5 carbon atoms capable of being substituted with fluorine, an alkynyl group having 2 to 5 carbon atoms capable of being substituted with fluorine, SO₂R', and COR',
R' is any one selected from the group consisting of an alkyl group having 1 to 5 carbon atoms capable of being substituted with fluorine, an alkenyl group having 2 to 5 carbon atoms capable of being substituted with fluorine, and an alkynyl group having 2 to 5 carbon atoms capable of being substituted with fluorine, and
R₂ and R₃ are each independently any one selected from the group consisting of H, an alkyl group having 1 to 5 carbon atoms, and an alkoxy group having 1 to 5 carbon atoms, 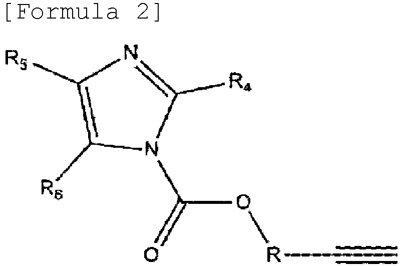
wherein in Formula 2 above, R is an alkylene group having 1 to 3 carbon atoms capable of being substituted with fluorine, and
R₄ to R₆ are each independently any one selected from the group consisting of H, an alkyl group having 1 to 3 carbon atoms, and a nitrile group, 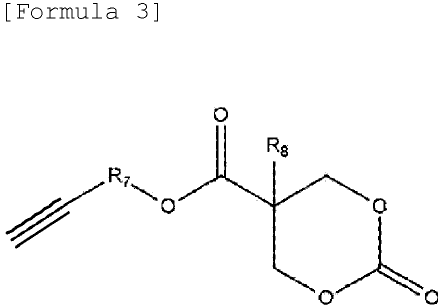
wherein in Formula 3 above, R₇ is an alkylene group having 1 to 8 carbon atoms capable of being substituted with fluorine, and
R₈ is any one selected from the group consisting of H, an alkyl group having 1 to 10 carbon atoms, and a cycloalkyl group having 3 to 8 carbon atoms.

2. The non-aqueous electrolyte of claim 1, wherein the compound of Formula 1 above is any one selected from Formulae 1-1 to 1-6 below.

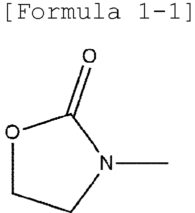

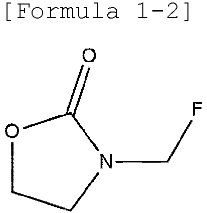

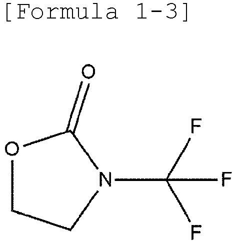

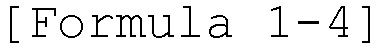

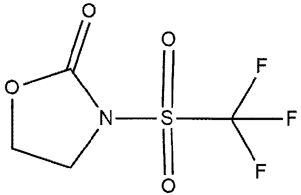

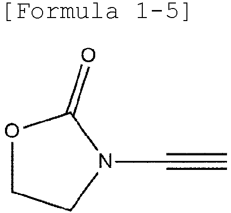

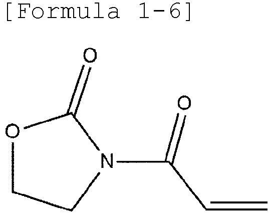

3. The non-aqueous electrolyte of claim 1, wherein the compound of Formula 2 above is a compound of Formula 2-1 below.

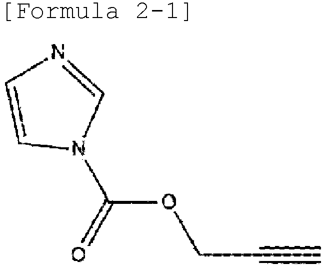

4. The non-aqueous electrolyte of claim 1, wherein the compound of Formula 3 above is a compound of Formula 3-1 below, 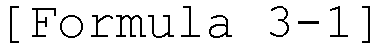 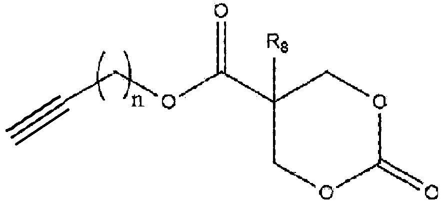 wherein in Formula 3-1 above,
n is a natural number of 1 to 8, and
R₈ is H, or a substituted or unsubstituted alkyl group having 1 to 10 carbon atoms.

5. The non-aqueous electrolyte of claim 1, wherein the compound of Formula 3 above is a compound of Formula 3-2 below.

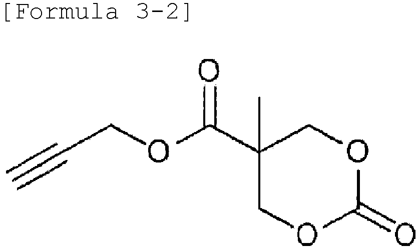

6. The non-aqueous electrolyte of claim 1, wherein the non-aqueous electrolyte comprises the first additive in an amount of 0.01 parts by weight to 10 parts by weight based on 100 parts by weight of the non-aqueous electrolyte.

7. The non-aqueous electrolyte of claim 1, wherein the non-aqueous electrolyte comprises the second additive in an amount of 0.01 parts by weight to 5 parts by weight based on 100 parts by weight of the non-aqueous electrolyte.

8. The non-aqueous electrolyte of claim 1, wherein the non-aqueous electrolyte comprises the first additive and the second additive at a weight ratio of 1:0.001 to 1:500.

9. The non-aqueous electrolyte of claim 1, wherein the lithium salt is at least one selected from the group consisting of LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂, LiN(SO₂CF₂CF₃)₂, and LiN(SO₂CF₃)₂.

10. The non-aqueous electrolyte of claim 1, wherein the non-aqueous electrolyte comprises the lithium salt at a concentration of 0.5 M to 5.0 M.

11. The non-aqueous electrolyte of claim 1, wherein the organic solvent comprises at least one organic solvent selected from the group consisting of a cyclic carbonate-based organic solvent, a linear carbonate-based organic solvent, a linear ester-based organic solvent, and a cyclic ester-based organic solvent.

12. A lithium secondary battery comprising:
a positive electrode including a positive electrode active material layer;
a negative electrode including a negative electrode active material layer; and
a non-aqueous electrolyte of any one of claims 1 to 11.

13. The lithium secondary battery of claim 12, wherein the positive electrode active material layer comprises, as a positive electrode active material, a lithium-nickel-based oxide represented by Formula 4 below.
[Formula 4] LiₓNiₐCo_{b}M¹_{c}M²_{d}O₂
wherein in Formula 4 above, M¹ is Mn, Al, or a combination thereof,
M² is at least one selected from the group consisting of Zr, W, Y, Ba, Ca, Ti, Mg, Ta, and Nb, and
0.90≤x≤1.1, 0.80≤a<1.0, 0<b<0.2, 0<c<0.2, 0≤d≤0.1.

14. The lithium secondary battery of claim 12, wherein the negative electrode active material layer comprises SiOₓ, (0≤x<2) as a negative electrode active material.

## Patentansprüche

1. Nichtwässriger Elektrolyt, umfassend:
ein Lithiumsalz;
ein organisches Lösungsmittel;
eine Verbindung der nachstehenden Formel 1 als erstes Additiv; und
eine Verbindung der nachstehenden Formel 2 oder Formel 3 als zweites Additiv, 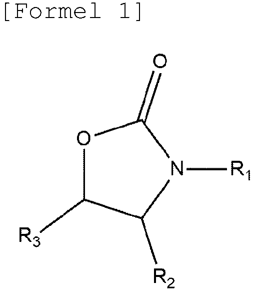
worin in der obigen Formel 1, R₁ eines ist, das ausgewählt ist aus der Gruppe bestehend aus einer Alkylgruppe mit 1 bis 5 Kohlenstoffatomen, die mit Fluor substituiert sein kann, einer Alkenylgruppe mit 2 bis 5 Kohlenstoffatomen, die mit Fluor substituiert sein kann, einer Alkinylgruppe mit 2 bis 5 Kohlenstoffatomen, die mit Fluor substituiert sein kann, SO₂R' und COR',
worin R' eines ist, das ausgewählt ist aus der Gruppe bestehend aus einer Alkylgruppe mit 1 bis 5 Kohlenstoffatomen, die mit Fluor substituiert sein kann, einer Alkenylgruppe mit 2 bis 5 Kohlenstoffatomen, die mit Fluor substituiert sein kann, und einer Alkinylgruppe mit 2 bis 5 Kohlenstoffatomen, die mit Fluor substituiert sein kann, und
R₂ und R₃ jeweils unabhängig eines sind, das ausgewählt ist aus der Gruppe bestehend aus H, einer Alkylgruppe mit 1 bis 5 Kohlenstoffatomen und einer Alkoxygruppe mit 1 bis 5 Kohlenstoffatomen, 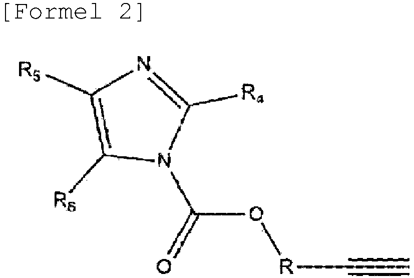
worin in der obigen Formel 2, R eine Alkylengruppe mit 1 bis 3 Kohlenstoffatomen ist, die mit Fluor substituiert sein kann, und
R₄ bis R₆ jeweils unabhängig eines sind, das ausgewählt ist aus der Gruppe bestehend aus H, einer Alkylgruppe mit 1 bis 3 Kohlenstoffatomen und einer Nitrilgruppe, 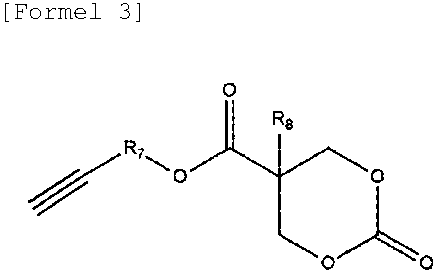
worin in der obigen Formel 3, R₇ eine Alkylengruppe mit 1 bis 8 Kohlenstoffatomen ist, die mit Fluor substituiert sein kann, und
R₈ eines ist, das ausgewählt ist aus der Gruppe bestehend aus H, einer Alkylgruppe mit 1 bis 10 Kohlenstoffatomen und einer Cycloalkylgruppe mit 3 bis 8 Kohlenstoffatomen.

2. Nichtwässriger Elektrolyt gemäß Anspruch 1, wobei die Verbindung der obigen Formel 1 eine ist, die ausgewählt ist aus den nachstehenden Formeln 1-1 bis 1-6.

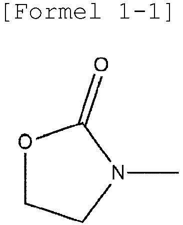

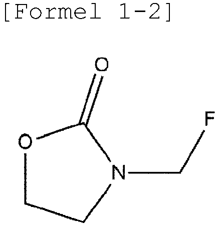

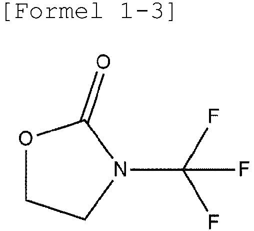

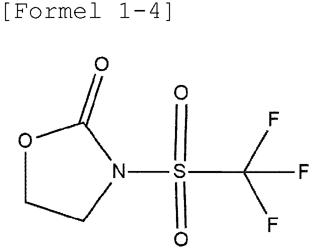

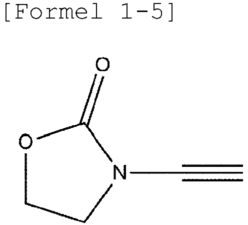

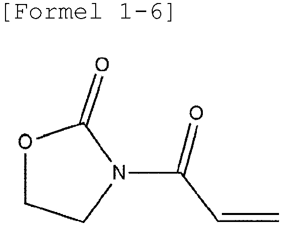

3. Nichtwässriger Elektrolyt gemäß Anspruch 1, wobei die Verbindung der obigen Formel 2 eine Verbindung der nachstehenden Formel 2-1 ist.

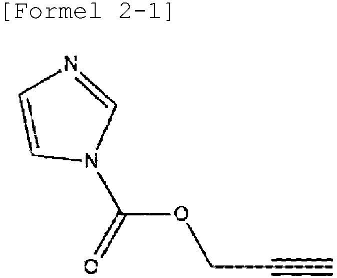

4. Nichtwässriger Elektrolyt gemäß Anspruch 1, wobei die Verbindung der obigen Formel 3 eine Verbindung der nachstehenden Formel 3-1 ist, 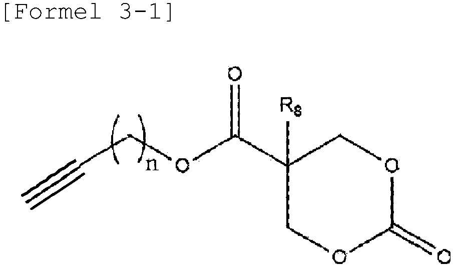 worin in der obigen Formel 3-1,
n eine natürliche Zahl von 1 bis 8 ist und
R₈ H oder eine substituierte oder unsubstituierte Alkylgruppe mit 1 bis 10 Kohlenstoffatomen ist.

5. Nichtwässriger Elektrolyt gemäß Anspruch 1, wobei die Verbindung der obigen Formel 3 eine Verbindung der nachstehenden Formel 3-2 ist.

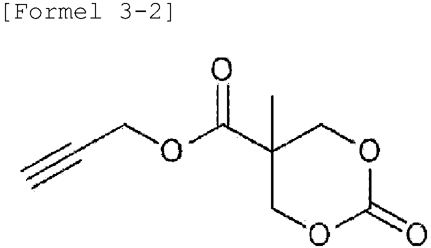

6. Nichtwässriger Elektrolyt gemäß Anspruch 1, wobei der nichtwässrige Elektrolyt das erste Additiv in einer Menge von 0,01 Gewichtsteilen bis 10 Gewichtsteilen, bezogen auf 100 Gewichtsteile des nichtwässrigen Elektrolyten, umfasst.

7. Nichtwässriger Elektrolyt gemäß Anspruch 1, wobei der nichtwässrige Elektrolyt das zweite Additiv in einer Menge von 0,01 Gewichtsteilen bis 5 Gewichtsteilen, bezogen auf 100 Gewichtsteile des nichtwässrigen Elektrolyten, umfasst.

8. Nichtwässriger Elektrolyt gemäß Anspruch 1, wobei der nichtwässrige Elektrolyt das erste Additiv und das zweite Additiv in einem Gewichtsverhältnis von 1:0,001 bis 1:500 umfasst.

9. Nichtwässriger Elektrolyt gemäß Anspruch 1, wobei das Lithiumsalz mindestens eines ist, das ausgewählt ist aus der Gruppe bestehend aus LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂, LiN(SO₂CF₂CF₃)₂ und LiN(SO₂CF₃)₂.

10. Nichtwässriger Elektrolyt gemäß Anspruch 1, wobei der nichtwässrige Elektrolyt das Lithiumsalz in einer Konzentration von 0,5 M bis 5,0 M umfasst.

11. Nichtwässriger Elektrolyt gemäß Anspruch 1, wobei das organische Lösungsmittel mindestens ein organisches Lösungsmittel umfasst, das ausgewählt ist aus der Gruppe bestehend aus einem organischen Lösungsmittel auf Basis eines cyclischen Carbonats, einem organischen Lösungsmittel auf Basis eines linearen Carbonats, einem organischen Lösungsmittel auf Basis eines linearen Esters und einem organischen Lösungsmittel auf Basis eines cyclischen Esters.

12. Lithium-Sekundärbatterie, umfassend:
eine positive Elektrode, die eine Positivelektrodenaktivmaterialschicht umfasst;
eine negative Elektrode, die eine Negativelektrodenaktivmaterialschicht umfasst; und
einen nichtwässrigen Elektrolyten gemäß mindestens einem der Ansprüche 1 bis 11.

13. Lithium-Sekundärbatterie gemäß Anspruch 12, wobei die Positivelektrodenaktivmaterialschicht als Positivelektrodenaktivmaterial ein Oxid auf Lithium-NickelBasis umfasst, das durch die nachstehende Formel 4 dargestellt wird.
[Formel 4] LiₓNiₐCo_{b}M¹_{c}M²_{d}O₂
worin in der obigen Formel 4, M¹ Mn, Al oder eine Kombination davon ist,
M² mindestens eines ist, das ausgewählt ist aus der Gruppe bestehend aus Zr, W, Y, Ba, Ca, Ti, Mg, Ta und Nb, und
0,90 ≤ x ≤ 1,1, 0,80 ≤ a < 1,0, 0 < b < 0,2, 0 < c < 0,2, 0 ≤ d ≤ 0,1.

14. Lithium-Sekundärbatterie gemäß Anspruch 12, wobei die Negativelektrodenaktivmaterialschicht SiOₓ (0 ≤ x < 2) als Negativelektrodenaktivmaterial umfasst.

## Revendications

1. Électrolyte non aqueux comprenant :
un sel de lithium ;
un solvant organique ;
un composé de Formule 1 ci-dessous en tant que premier additif ; et
un composé de Formule 2 ou de Formule 3 ci-dessous en tant que deuxième additif, 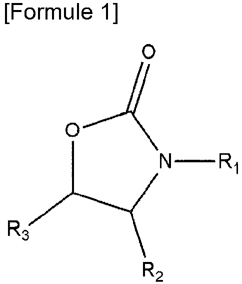
dans lequel, dans la Formule 1 ci-dessus, R₁ est l'un quelconque choisi dans le groupe consistant en un groupe alkyle présentant 1 à 5 atomes de carbone pouvant être substitué par du fluor, un groupe alcényle présentant 2 à 5 atomes de carbone pouvant être substitué par du fluor, un groupe alcynyle présentant 2 à 5 atomes de carbone pouvant être substitué par du fluor, SO₂R' et COR',
R' est l'un quelconque choisi dans le groupe consistant en un groupe alkyle présentant 1 à 5 atomes de carbone pouvant être substitué par du fluor, un groupe alcényle présentant 2 à 5 atomes de carbone pouvant être substitué par du fluor, et un groupe alcynyle présentant 2 à 5 atomes de carbone pouvant être substitué par du fluor, et
R₂ et R₃ sont chacun indépendamment l'un quelconque choisi dans le groupe consistant en H, un groupe alkyle présentant 1 à 5 atomes de carbone, et un groupe alcoxy présentant 1 à 5 atomes de carbone, 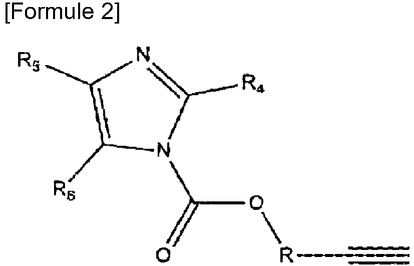
dans lequel, dans la Formule 2 ci-dessus, R est un groupe alkylène présentant 1 à 3 atomes de carbone pouvant être substitué par du fluor, et
R₄ à R₆ sont chacun indépendamment l'un quelconque choisi dans le groupe consistant en H, un groupe alkyle présentant 1 à 3 atomes de carbone, et un groupe nitrile, 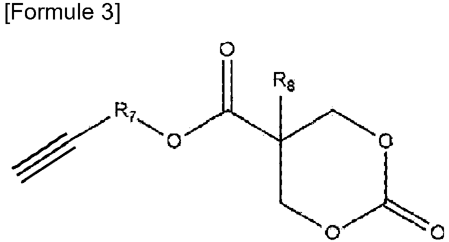
dans lequel, dans la Formule 3 ci-dessus, R₇ est un groupe alkylène présentant 1 à 8 atomes de carbone pouvant être substitué par du fluor, et
R₈ est l'un quelconque choisi dans le groupe consistant en H, un groupe alkyle présentant 1 à 10 atomes de carbone, et un groupe cycloalkyle présentant 3 à 8 atomes de carbone.

2. Électrolyte non aqueux selon la revendication 1, dans lequel le composé de la Formule 1 ci-dessus est l'un quelconque choisi dans les Formules 1-1 à 1-6 ci-dessous.

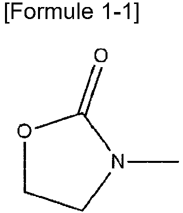

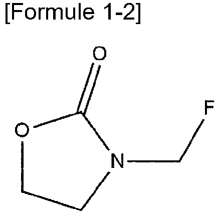

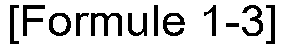

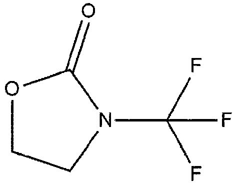

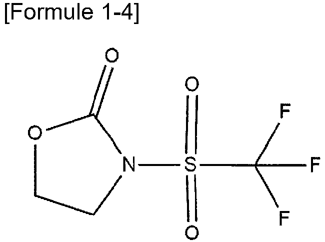

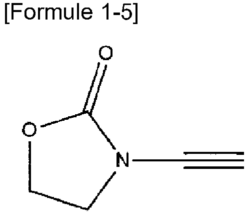

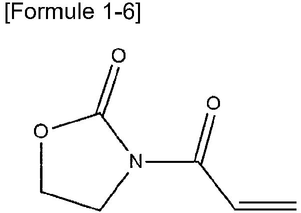

3. Électrolyte non aqueux selon la revendication 1, dans lequel le composé de Formule 2 ci-dessus est un composé de Formule 2-1 ci-dessous.

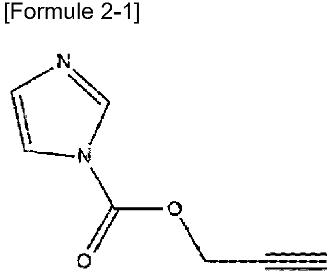

4. Électrolyte non aqueux selon la revendication 1, dans lequel le composé de Formule 3 ci-dessus est un composé de Formule 3-1 ci-dessous, 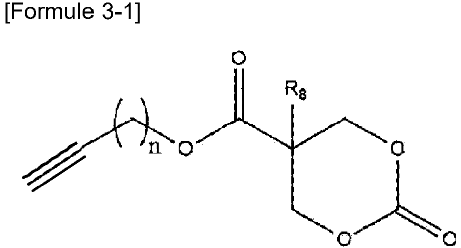 dans lequel, dans la Formule 3-1 ci-dessus,
n est un nombre naturel de 1 à 8, et
R₈ est H, ou un groupe alkyle substitué ou non substitué présentant 1 à 10 atomes de carbone.

5. Électrolyte non aqueux selon la revendication 1, dans lequel le composé de Formule 3 ci-dessus est un composé de Formule 3-2 ci-dessous.

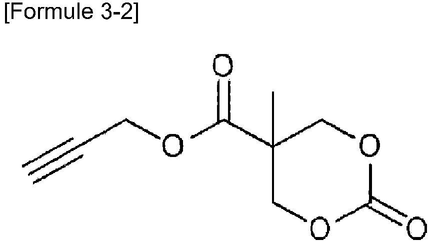

6. Électrolyte non aqueux selon la revendication 1, dans lequel l'électrolyte non aqueux comprend le premier additif dans une quantité de 0,01 partie en poids à 10 parties en poids sur la base de 100 parties en poids de l'électrolyte non aqueux.

7. Électrolyte non aqueux selon la revendication 1, dans lequel l'électrolyte non aqueux comprend le deuxième additif dans une quantité de 0,01 partie en poids à 5 parties en poids sur la base de 100 parties en poids de l'électrolyte non aqueux.

8. Électrolyte non aqueux selon la revendication 1, dans lequel l'électrolyte non aqueux comprend le premier additif et le deuxième additif selon un rapport en poids compris entre 1:0,001 et 1:500.

9. Électrolyte non aqueux selon la revendication 1, dans lequel le sel de lithium est au moins l'un choisi dans le groupe consistant en LiCl, LiBr, Lil, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂, LiN (SO₂CF₂CF₃)₂, et LiN (SO₂CF₃)₂.

10. Électrolyte non aqueux selon la revendication 1, dans lequel l'électrolyte non aqueux comprend le sel de lithium à une concentration de 0,5 M à 5,0 M.

11. Électrolyte non aqueux selon la revendication 1, dans lequel le solvant organique comprend au moins un solvant organique choisi dans le groupe consistant en un solvant organique à base de carbonate cyclique, un solvant organique à base de carbonate linéaire, un solvant organique à base d'ester linéaire et un solvant organique à base d'ester cyclique.

12. Batterie secondaire au lithium comprenant :
une électrode positive incluant une couche de matériau actif d'électrode positive ;
une électrode négative incluant une couche de matériau actif d'électrode négative ; et
un électrolyte non aqueux selon l'une quelconque des revendications 1 à 11.

13. Batterie secondaire au lithium selon la revendication 12, dans laquelle la couche de matériau actif d'électrode positive comprend, en tant que matériau actif d'électrode positive, un oxyde à base de lithium-nickel représenté par la Formule 4 ci-dessous.
[Formule 4] LiₓNiₐCO_{b}M¹_{c}M²_{d}O₂
dans laquelle, dans la Formule 4 ci-dessus, M¹ est Mn, Al, ou une combinaison de ceux-ci,
M² est au moins un choisi dans le groupe consistant en Zr, W, Y, Ba, Ca, Ti, Mg, Ta, et Nb, et
0,90 ≤ x ≤ 1,1, 0,80 ≤ a < 1,0, 0 < b < 0,2, 0 < c < 0,2, 0 ≤ d ≤ 0,1.

14. Batterie secondaire au lithium selon la revendication 12, dans laquelle la couche de matériau actif d'électrode négative comprend SiOₓ, (0 ≤ x < 2) en tant que matériau actif d'électrode négative.
